# EUROPÄISCHE PATENTSCHRIFT

(11) **EP 1 176 058 B1**
(45) Veröffentlichungstag und Bekanntmachung des Hinweises auf die Patenterteilung: **21.09.2005**
(21) Anmeldenummer: 01117318.4
(22) Anmeldetag: 18.07.2001
(51) Int. Cl.: B60R 11/02

(54) **Gehäuse mit einer Befestigungsvorrichtung mit mindestens einer aus dem Gehäuse ragenden Rastfeder**
Housing fixation device having at least a protruding latch-spring
Boitier à dispositif de fixation présentant au moins un ressort-verrou saillant

(30) Priorität: 28.07.2000 DE 10036853
(43) Veröffentlichungstag der Anmeldung: 30.01.2002
(73) Patentinhaber: BECKER GmbH, 76307 Karlsbad (DE)
(72) Erfinder: Gaissert, Helmut, 75179 Pforzheim (DE)
(74) Vertreter: Patentanwälte Westphal, Mussgnug & Partner

(56) Entgegenhaltungen:
- EP-A- 0 570 732
- US-A- 4 096 548

## Beschreibung

Die Erfindung betrifft ein Gehäuse mit einer Befestigungsvorrichtung mit mindestens einer aus dem Gehäuse ragenden Rastfeder, die zum Einschieben des Gehäuses in einen Einbaurahmen oder einen Einbauschacht und zum Entriegeln in das Gehäuse versenkbar ist.

Autoradios sind mit derartigen Gehäusen, die auf der rechten und der linken Seite je eine aus dem Gehäuse ragende und zum Einschieben in den Einbaurahmen oder den Einbauschacht sowie zum Entriegeln in das Gehäuse versenkbare Rastfeder aufweisen, ausgerüstet.

Aus EP 0 570 732 A1 ist ein Autoradio mit einem derartigen Gehäuse bekannt, daß dem Oberbegriff des Anspruchs 1 entspricht.

Das Gehäuse wird mittels eines speziellen Flachbandschlüssels entriegelt, an dessen einem Ende eine Schräge und eine Raste eingearbeitet sind. Zum Entriegeln werden auf jeder Seite je einer dieser Flachbandschlüssel in einen Schlitz eingeführt, bis eine Nase der Rastfeder an der Schräge aufgleitend in die Raste einrastet. Während des Gleitens der Nase der Rastfeder auf der Schräge des Flachbandschlüssels wird die Rastfeder in das Gehäuse versenkt. Das Autoradio kann nun aus dem Einbaurahmen oder Einbauschacht gezogen werden. Zum Einbau wird das Autoradio in den Einbaurahmen oder Einbauschacht gesteckt, wobei die beiden Rastfedern zunächst in das Gehäuse gedrückt werden und hinter dem Einbaurahmen herausspringen, um das Autoradio zu arretieren.

Ein Vorteil dieses bekannten Autoradios, der sich aber auch als Nachteil erweist, zeigt sich in einem erhöhten Diebstahlschutz, weil zum Entriegeln des Autoradios ein spezieller Flachbandschlüssel erforderlich ist, der jedoch leicht nachgebaut werden kann. In der Erfordernis eines speziellen Werkzeuges liegt aber auch gleichzeitig der angedeutete Nachteil begründet, denn das bekannte Autoradio lässt sich weder mit der bloßen Hand noch mittels eines üblichen Werkzeuges entriegeln.

Die US 4 096 548 offenbart einen Verriegelungsmechanismus für eine Leiterplatte beruhend auf einem zylindrischen Stift mit einer parallel zur Stiftachse verlaufenden flachen Ausnehmung, auf welcher ein Knie einer Blattfeder aufliegt. Wird der zylindrische Stift um seine Längsachse gedreht, liegt das Knie auf dem Außenumfang des Stifts auf, wodurch der Abstand zwischen Knie und Stiftachse vergrößert wird, so dass die Blattfeder gespannt wird und in einen Verriegelungszustand übergeht.

Es ist daher Aufgabe der Erfindung, ein in einen Einbaurahmen einbaubares Gehäuse mit einer Befestigungsvorrichtung mit Rastfedern so zu gestalten, dass es von Hand oder mittels eines Werkzeuges entriegelbar ist, sowie dass die Befestigungsvorrichtung aus nur wenigen Teilen aufgebaut ist und nur wenig Platz beansprucht.

Die Erfindung löst diese Aufgabe mit den im Anspruch 1 angegebenen Merkmalen dadurch, dass ein von Hand oder mittels eines Werkzeuges drehbarer Exzenter in Eingriff mit der Rastfeder steht und dass die Rastfeder durch Drehen des Exzenters in den Verriegelungszustand, in welchem sie aus dem Gehäuse ragt, und in den Entriegelungszustand, in welchem sie in das Gehäuse versenkt ist, versetzbar ist. Erfindungsgemäß ist ein Exzenter zum Verstellen der Rastfeder vorgesehen, der z. B. in eine Aussparung, einen Haken oder dergleichen der Rastfeder greift.

Der Exzenter ist unmittelbar von Hand oder mittels eines Werkzeugs, vorzugsweise eines üblichen Werkzeugs, z. B. eines Schraubendrehers, Schaubschlüssels oder Inbusschlüssels, drehbar, um das Gehäuse zu entriegeln und aus dem Einbaurahmen zu nehmen.

Vorzugsweise ist wie beim Stand der Technik auf der rechten und der linken Seite des Gehäuses je eine Rastfeder angeordnet. Es können aber auch zwei oder mehr Rastfedern auf jeder Seite vorgesehen sein.

Die Erfindung wird nun anhand der Figuren näher beschrieben und erläutert.

In der Zeichnung zeigen:
- Figur 1: ein Gehäuse mit zwei Rastfedern,
- Figur 2: eine Seitenansicht des Gehäuses aus Figur 1,
- Figur 3: einen Schnitt durch eine Ecke eines ersten Ausführungsbeispieles eines erfindungsgemäßen Gehäuses mit einer Rastfeder und einem Exzenter im verriegelten Zustand,
- Figur 4: einen Schnitt durch eine Ecke eines zweiten Ausführungsbeispieles eines erfindungsgemäßen Gehäuses mit einer Rastfeder und einem Exzenter, wobei die Rastfeder im verriegelten und im entriegelten Zustand gezeigt ist,
- Figur 5: ein erstes Ausführungsbeispiel einer Rastfeder in perspektivischer Ansicht,
- Figur 6: eine Stirnansicht des ersten Ausführungsbeispiels der Rastfeder mit dem Exzenter im verriegelten Zustand,
- Figur 7: eine Stirnansicht des ersten Ausführungsbeispiels der Rastfeder mit dem Exzenter im entriegelten Zustand,
- Figur 8: eine Stirnansicht eines zweiten Ausführungsbeispieles der Rastfeder mit dem Exzenter im verriegelten Zustand,
- Figur 9: eine Stirnansicht des zweiten Ausführungsbeispieles der Rastfeder mit dem Exzenter im entriegelten Zustand,
- Figur 10: einen Ausschnitt aus der Frontseite eines in einen Rahmen eingebauten Autoradios mit einem dritten Ausführungsbeispiel eines erfindungsgemäßen Gehäuses in perspektivischer Darstellung,
- Figur 11: den linken Teil der Frontseite eines in einen Rahmen eingesetzten Autoradios mit einem dritten Ausführungsbeispiel des erfindungsgemäßen Gehäuses,
- Figur 12: den rechten Teil der Frontseite des in einen Rahmen eingesetzten Autoradios mit einem dritten Ausführungsbeispiel des erfindungsgemäßen Gehäuses und
- Figur 13: einen Exzenter.

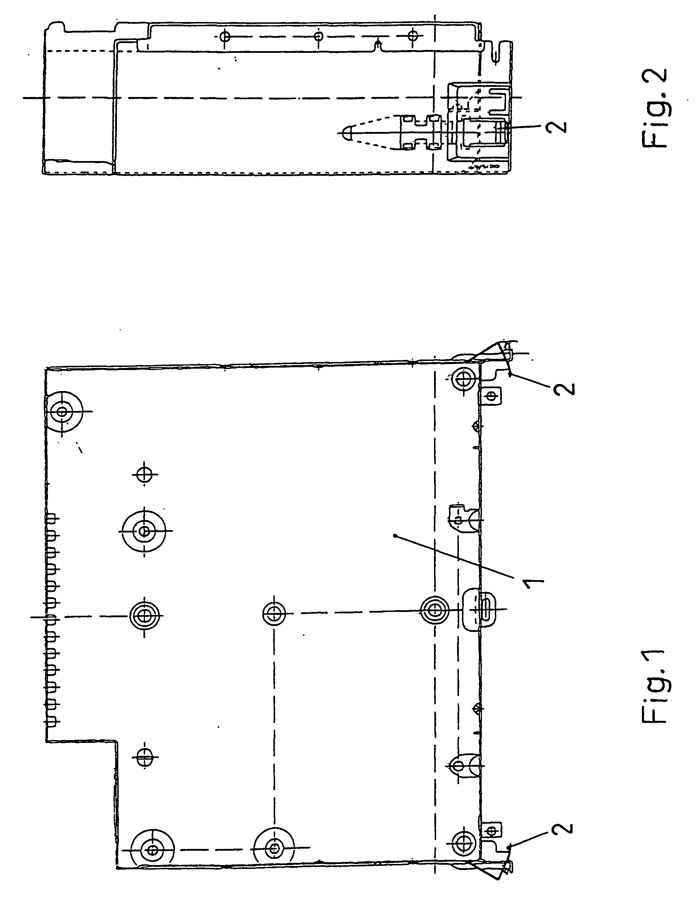

In der Figur 1 ist ein Gehäuse 1 eines Autoradios mit je einer Rastfeder 2 in Draufsicht gezeigt, um eine mögliche Anordnung der Rastfedern am Gehäuse 1 zu zeigen. Auf jeder Seite des Gehäuses können aber auch mehr als eine Rastfeder, z. B. zwei Rastfedern, vorgesehen sein.

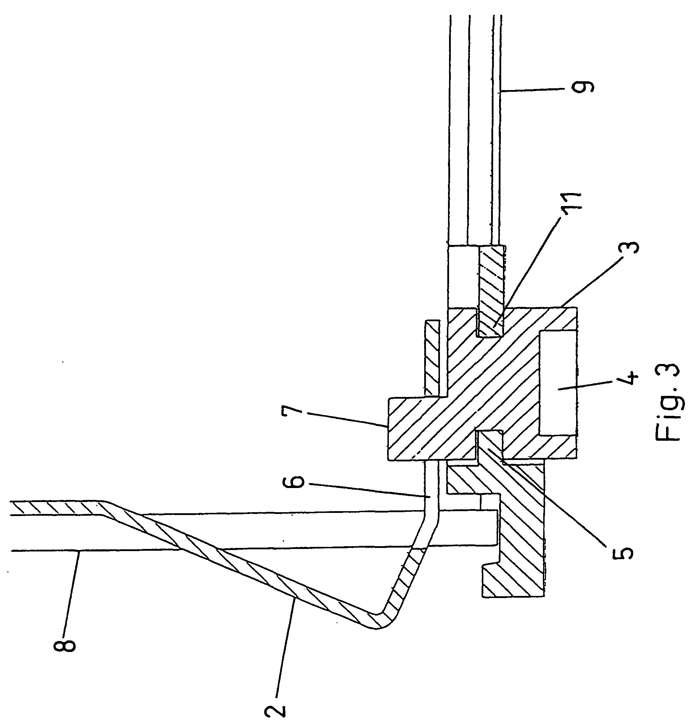

Figur 2 zeigt eine Seitenansicht des Gehäuses aus der Figur 1. In der Figur 3 ist ein Schnitt durch die linke Ecke eines ersten Ausführungsbeispieles eines erfindungsgemäßen Gehäuses mit einer Rastfeder 2 und einem Exzenter 3 gezeigt.

An der linken Seitenwand 8 des Gehäuses ist eine im verriegelten Zustand aus dem Gehäuse ragende Rastfeder 2 befestigt. Ein Zapfen 7 des Exzenters 3 steht in Eingriff mit einer Aussparung 6 der Rastfeder 2. Der Exzenter 3 sitzt mit einer ringförmigen Nut 5 in einem Halteloch 11 der Frontseite 9 des Gehäuses und wird auf diese Weise drehbar in der Frontseite 9 gelagert. Auf der Stirnseite des Exzenters 3 ist beispielsweise ein Schlitz 4 für den Eingriff eines Schraubendrehers eingearbeitet.

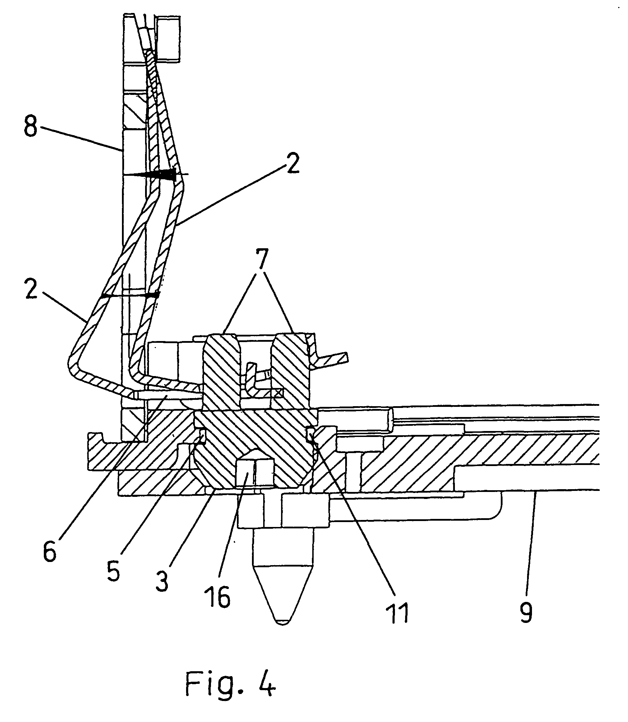

In der Figur 4 ist ein Schnitt durch die linke Ecke eines zweiten Ausführungsbeispieles eines erfindungsgemäßen Gehäuses dargestellt.

In der Figur 4 sind die Rastfeder 2 und der Exzenter 3 sowohl in der verriegelten Stellung als auch in der entriegelten Stellung gezeigt. Beim Drehen des Exzenters 3 in den entriegelten Zustand drückt der Zapfen 7 die Aussparung 6 der Rastfeder 2 nach innen, so dass die Rastfeder 2 im Gehäuse versenkt wird. Durch Weiter- oder Zurückdrehen des Exzenters 3 bewegt sich der Zapfen 7 nach außen, so dass die Rastfeder 2 wieder aus dem Gehäuse herausragt. Anstelle eines Schlitzes für einen Schraubendreher ist in der Figur 4 in die Stirnseite des Exzenters 3 ein Sechskantloch 16 für den Eingriff eines Inbusschlüssels eingearbeitet. Anstelle eines Schlitzes für einen Schraubendreher oder eines Sechskantloches für einen Inbusschlüssel kann beispielsweise ein Sechskantkopf für einen Schraubschlüssel oder ein Drehkopf zum Drehen von Hand am Exzenter vorgesehen sein.

Als Alternative zu den angeführten Beispielen kann im Exzenter eine Ausnehmung für einen Torx-Schraubendreher vorgesehen sein.

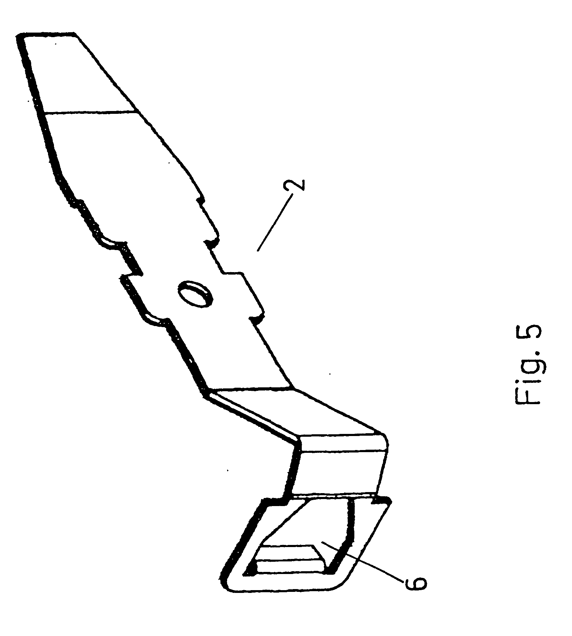

Figur 5 zeigt ein erstes Ausführungsbeispiel einer Rastfeder 2 in perspektivischer Ansicht. An der Stirnseite der Rastfeder 2 ist eine Aussparung 6 für den Eingriff des Zapfens 7 des Exzenters 3 vorgesehen.

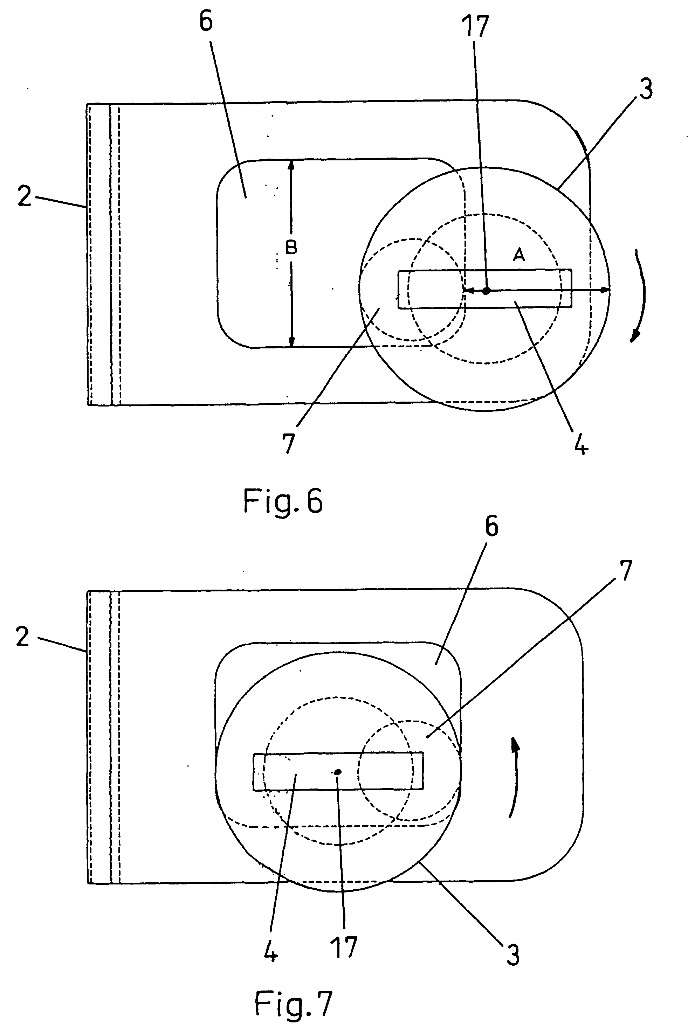

Figur 6 zeigt die Frontseite des ersten Ausführungsbeispieles der Rastfeder 2 mit dem Exzenter 3 in der verriegelten Stellung. Der Zapfen 7 liegt an der rechten Seitenwand der Aussparung 6 an. Der Exzenter 3 ist um einen Winkel von 180° nach rechts drehbar, um die Rastfeder 2 in den entriegelten Zustand zu bringen. Auf der Stirnseite des Exzenters 3 ist der Schlitz 4 für einen Schraubendreher vorgesehen.

Figur 7 zeigt die Frontseite des ersten Ausführungsbeispieles der Rastfeder 2 mit dem Exzenter 3 in der entriegelten Stellung. Der Zapfen 7 des Exzenters 3 liegt ebenfalls an der rechten Seite der Aussparung 6 an, jedoch ist der Exzenter 3 verglichen mit der Figur 6 um 180° gedreht, wodurch die Rastfeder 2 um das Wegstück A nach rechts bewegt wurde und somit im Gehäuse versenkt ist. Durch Drehen des Exzenters 3 um 180° nach links wird die Rastfeder 2 um das Wegstück A wieder nach links in die verriegelte Stellung bewegt. Der Exzenter 3 ist um seine Drehachse 17 drehbar. Die Drehrichtung ist durch den Pfeil angedeutet. Weil die Breite B der Aussparung 6 kleiner gewählt ist als der Durchmesser des Exzenters, lässt sich der Exzenter nur um jeweils 180° nach rechts oder links drehen. Die Aussparung 6 dient beim ersten Ausführungsbeispiel der Rastfeder 2 nicht nur als Vorrichtung für den Eingriff des Exzenters, sondern wirkt gleichzeitig noch als Links- und Rechtsanschlag für die Ver- und die Entriegelung.

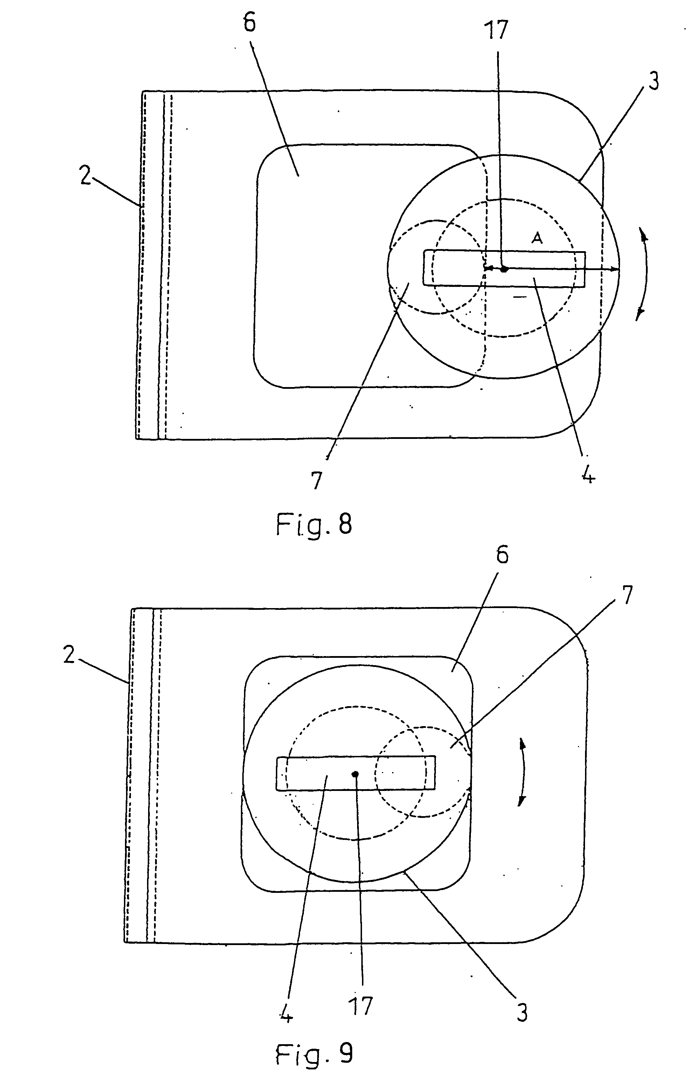

In Figur 8 ist ein zweites Ausführungsbeispiel der Rastfeder 2 im verriegelten Zustand dargestellt, während es in Figur 9 im entriegelten Zustand gezeigt ist. Das zweite Ausführungsbeispiel der Rastfeder 2 unterscheidet sich vom ersten dadurch, dass die Breite B der Aussparung 6 so groß wie der Durchmesser des Exzenters gewählt ist. Bei einer gleich wie oder größer als der Durchmesser des Exzenters 3 gewählten Breite B der Aussparung 6 wirkt die Aussparung 6 nicht mehr als Anschlag. Vielmehr lässt sich der Exzenter 3 endlos nach rechts oder links drehen.

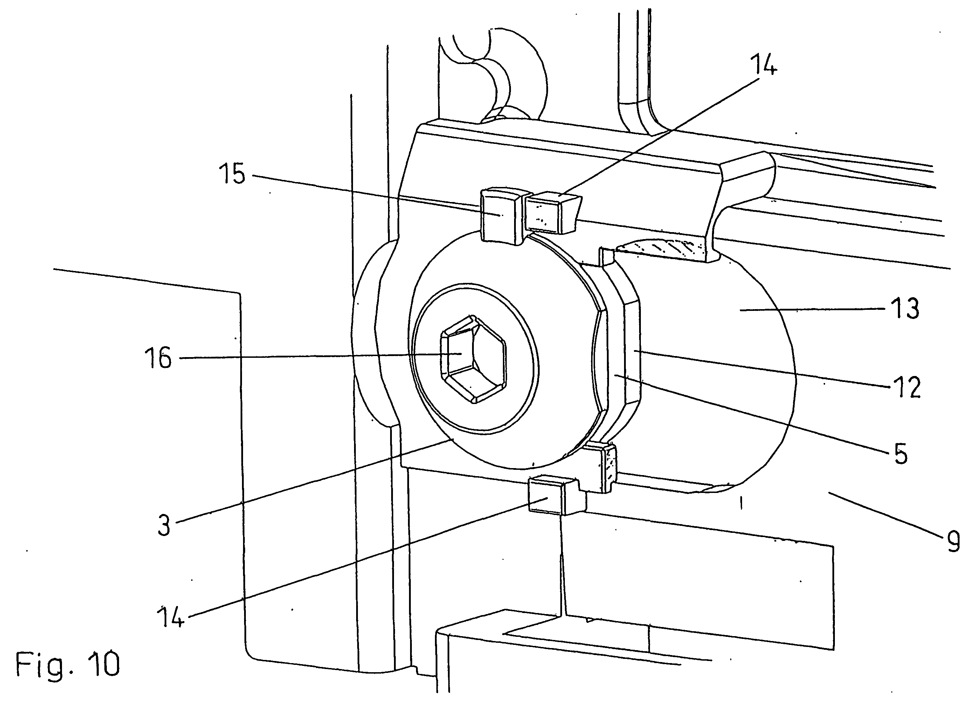

In der Figur 10 ist der linke Teil der Frontpartie eines dritten Ausführungsbeispieles eines erfindungsgemäßen Gehäuses in perspektivischer Ansicht gezeigt.

Der Exzenter 3 ist mit seiner Nut 5 drehbar in einem Langloch 13 der Frontseite 9 des Gehäuses gelagert. An der Frontseite 9 sind zwei sich gegenüberliegende Anschläge 14 angeordnet. Am Exzenter 3 ist ein Anschlag 15 vorgesehen, der in der entriegelten Stellung am einen Anschlag 14 und in der verriegelten Stellung am anderen Anschlag 14 der Frontseite 9 des Gehäuses anliegt. Am Umfang des Exzenters 3 ist eine Anfasung 12 oder sind zwei sich gegenüberliegende Anfasungen 12 eingearbeitet.

Wegen der beiden Anschläge 14 an der Blende und wegen des Anschlages 15 am Exzenter 3 wird das Gehäuse durch Drehen des Exzenters nach rechts beispielsweise verriegelt, während es durch Drehen des Exzenters nach links entriegelt wird. Bei diesem Ausführungsbeispiel der Erfindung muss der Exzenter zum Verriegeln und Entriegeln um 180° nach rechts oder links gedreht werden, während er bei den ersten beiden Ausführungsbeispielen endlos in beide Richtungen drehbar ist.

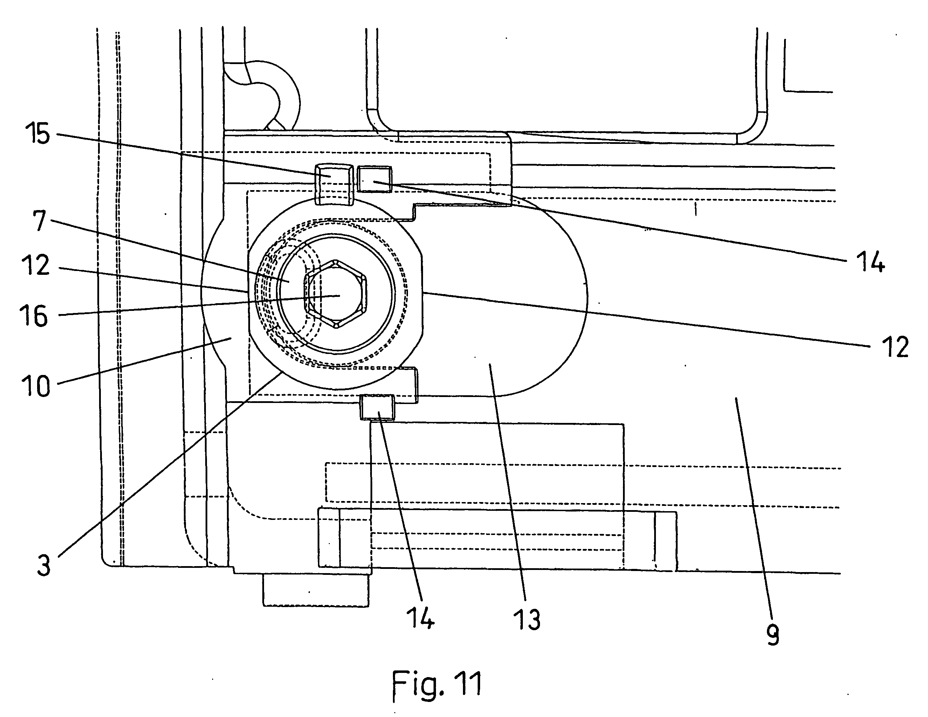

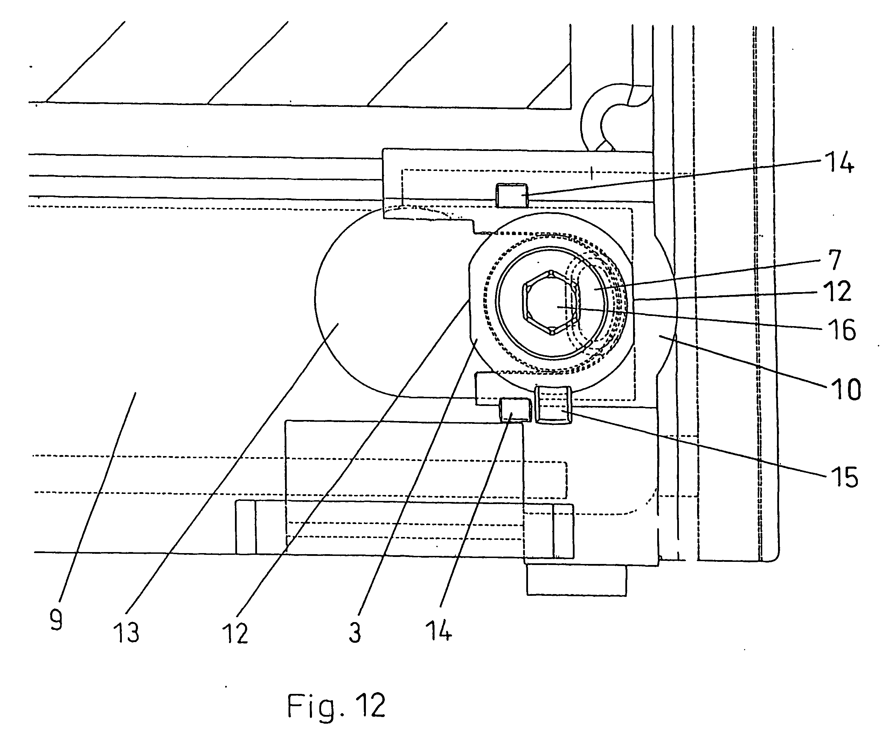

Figur 11 zeigt den linken Teil der Frontseite des dritten Ausführungsbeispieles des erfindungsgemäßen Gehäuses, während in der Figur 12 der rechte Teil der Frontseite abgebildet ist. In den Figuren 11 und 12 ist der Zapfen 7 des Exzenters 3 durch gestrichelte Linien angedeutet. Eine Anfasung 12 liegt an der linken Seitenwand 10 des Gehäuses an, weil der Exzenter 3 von der Rastfeder 2 gegen die linke Seitenwand 10 des Gehäuses gedrückt wird. Dadurch bewirkt die Rastfeder 2 beim Drehen des Exzenters 3 Rastverhalten. Beim Drehen weicht der Exzenter 3 im Langloch 13 zur Gehäusemitte hin aus, sein Rand wird aber stets von der Rastfeder 2 gegen die linke Seitenwand 10 des Gehäuses gedrückt. Alternativ oder auch gleichzeitig hierzu kann ein Federelement vorgesehen sein, das auf die andere Anfasung 12 drückt. Auch dieses Federelement erzeugt eine Rastwirküng. An der Stirnseite des Exzenters 3 ist ein Sechskantloch 16 für den Eingriff eines Inbusschlüssels vorgesehen. Das für die Lagerung des Exzenters 3 vorgesehene Langloch 13 hat außerdem den Vorteil, dass der Exzenter 3 und die Rastfeder 2 weniger eng tolerierbar sind.

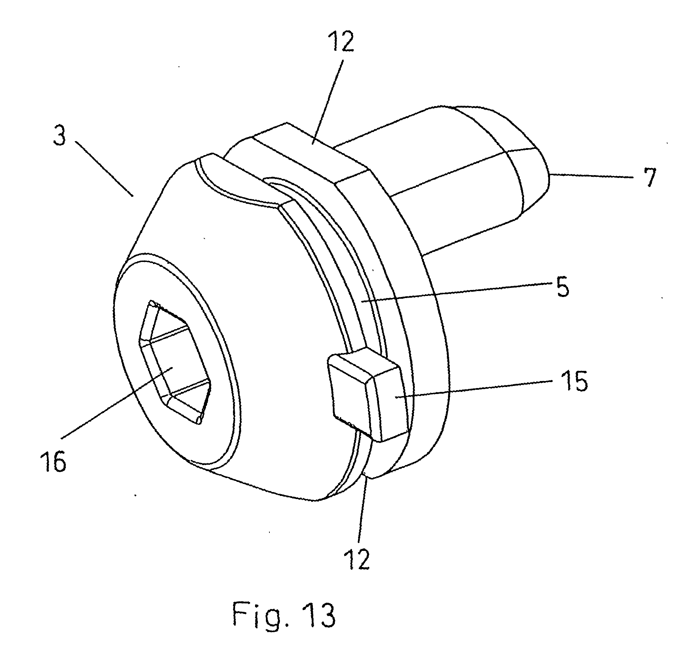

Schließlich ist in der Figur 13 ein Ausführungsbeispiel eines Exzenters in perspektivischer Darstellung abgebildet.

In der Mitte der Stirnseite des Exzenters 3 befindet sich ein Sechskantloch 16 für den Eingriff eines Inbusschlüssels. Am Umfang des Exzenters 3 sind der Anschlag 15 sowie die beiden sich gegenüberliegenden Anfasungen 12 angeordnet. An der Rückseite des Exzenters 3 sitzt der Zapfen 7, der in Eingriff mit der Aussparung 6 der Rastfeder 2 steht. Die ringförmige Nut 5 dient der drehbaren Lagerung des Exzenters in dem Halteloch 11 oder dem Langloch 13 der Frontseite 9 des Gehäuses 1.

Das erfindungsgemäße Gehäuse ist allgemein zum Einbau in einen Einbaurahmen oder einen Einbauschacht geeignet. Es lässt sich mittels der Rastfedern und der Exzenter leicht im Einbaurahmen oder -schacht verriegeln und wieder entriegeln. Hierzu sind keinerlei Spezialwerkzeuge erforderlich. Besonders vorteilhaft ist das erfindungsgemäße Gehäuse für ein Autoradio, in das auch ein Kassettengerät integriert sein kann, geeignet, weil die erfindungsgemäße Befestigungsvorrichtung mit den Rastfedern und den Exzentern aus nur wenigen Teilen besteht und nur wenig Platz beansprucht und weil für Kraftfahrzeuge die lichten Maße des Einbaurahmens oder Einbauschachtes genormt sind. Wegen der unmittelbar von Hand oder mittels eines üblichen Werkzeuges drehbaren Exzenter ist der Ein- und Ausbau eines Autoradios mit nur wenigen einfachen Handgriffen möglich.

### Bezugszeichenliste

- 1: Gehäuse
- 2: Rastfeder
- 3: Exzenter
- 4: Schlitz
- 5: Nut
- 6: Aussparung
- 7: Zapfen
- 8: Seitenwand
- 9: Frontseite
- 10: Seitenwand des Gehäuses
- 11: Halteloch
- 12: Anfasung
- 13: Langloch
- 14: Anschlag am Gehäuse
- 15: Anschlag am Exzenter
- 16: Sechskantloch
- 17: Drehachse

## Patentansprüche

1. Gehäuse (1) mit mindestens einer aus dem Gehäuse (1) ragenden Rastfeder (2), die zum Einschieben des Gehäuses (1) in einen Autoeinbaurahmen oder einen Autoeinbauschacht und zum Entriegeln in das Gehäuse (1) versenkbar ist,
**dadurch gekennzeichnet, dass** ein unmittelbar von Hand oder mittels eines Werkzeuges drehbarer Exzenter (3) im Eingriff mit der Rastfeder (2) steht, dass die Rastfeder (2) durch Drehen des Exzenters in den Verriegelungszustand, in welchem sie aus dem Gehäuse (1) ragt, und in den Entriegelungszustand, in welchem sie in das Gehäuse (1) versenkt ist, versetzbar ist und dass an der Rastfeder (2) für den Eingriff des Exzenters (3) eine Aussparung (6) oder ein Haken vorgesehen ist.

2. Gehäuse nach Anspruch 1,
**dadurch gekennzeichnet, dass** an der rechten und der linken Seite des Gehäuses (1) je eine Rastfeder (2) und je ein Exzenter (3) angeordnet sind.

3. Gehäuse nach Anspruch 1 oder 2
**dadurch gekennzeichnet, dass** die Breite B der Aussparung (6) kleiner als der Durchmesser des Exzenters (3) gewählt ist, um einen Rechts- und einen Linksabschlag für den Exzenter (3) zu bilden.

4. Gehäuse nach Anspruch 1 oder 2
**dadurch gekennzeichnet, dass** die Breite B der Aussparung (6) gleich wie oder größer als der Durchmesser des Exzenters (3) gewählt ist, so dass der Exzenter (3) in beide Drehrichtungen endlos drehbar ist.

5. Gehäuse nach einem der Ansprüche 1 bis 4,
**dadurch gekennzeichnet, dass** der Exzenter (3) einen Handgriff zum Drehen von Hand aufweist.

6. Gehäuse nach einem der Ansprüche 1 bis 4,
**dadurch gekennzeichnet, dass** der Exzenter (3) eine Vorrichtung (4, 16) zum Eingreifen für ein übliches Werkzeug aufweist.

7. Gehäuse nach Anspruch 6,
**dadurch gekennzeichnet, dass** der Exzenter (3) einen Schlitz (4) für den Eingriff eines Schraubendrehers aufweist.

8. Gehäuse nach Anspruch 6,
**dadurch gekennzeichnet, dass** der Exzenter (3) eine Ausnehmung für den Eingriff eines Torx-Schraubendrehers aufweist.

9. Gehäuse nach Anspruch 6,
**dadurch gekennzeichnet, dass** der Exzenter (3) einen Sechskantkopf für den Eingriff eines Schraubenschlüssels aufweist.

10. Gehäuse nach Anspruch 6,
**dadurch gekennzeichnet, dass** der Exzenter (3) ein Sechskantloch (16) für den Eingriff eines Inbusschlüssels aufweist.

11. Gehäuse nach einem der Ansprüche 1 bis 10,
**dadurch gekennzeichnet, dass** eine ringförmige Nut (5) am Umfang des Exzenters (3) vorgesehen ist und in einem Halteloch (11) oder Langloch (13) des Gehäuses (1) geführt ist.

12. Gehäuse nach einem der Ansprüche 1 bis 11,
**dadurch gekennzeichnet, dass** am Exzenter (3) eine Anfasung (12) oder zwei einander gegenüberliegende Anfasungen (12) eingearbeitet sind und dass auf mindestens eine der beiden Anfasungen (12) eine Feder (2) drückt, um beim Drehen des Exzenters (3) Rastverhalten zu erzeugen.

13. Gehäuse nach einem der Ansprüche 1 bis 11,
**dadurch gekennzeichnet, dass** am Exzenter (3) eine Anfasung (12) oder zwei einander gegenüberliegende Anfasungen (12) eingearbeitet sind und dass die Rastfeder (2) den Exzenter (3) gegen eine Seitenwand (10) des Gehäuses (1) drückt, um beim Drehen des Exzenters (3) Rastverhalten zu erzeugen.

14. Gehäuse nach einem der Ansprüche 1 bis 2 oder 4 bis 11,
**dadurch gekennzeichnet, dass** der Exzenter (3) ohne einen Anschlag ausgeführt und endlos nach rechts und links drehbar ist.

15. Gehäuse nach einem der Ansprüche 1 bis 13,
**dadurch gekennzeichnet, dass** am Exzenter (3) ein Anschlag (15) und am Gehäuse (1) zwei Anschläge (14) für den Verriegelungszustand und den Entriegelungszustand vorgesehen sind.

16. Gehäuse nach einem der vorangehenden Ansprüche,
**dadurch gekennzeichnet, dass** es sich bei dem Gehäuse (1) um ein Gehäuse für ein Autoradio handelt.

## Claims

1. A housing (1) with at least one latch spring (2), which projects out of the housing (1) and may be moved to a position in which it is accommodated within the housing (1) for the purpose of inserting the housing (1) into a car installation frame or a car installation compartment and for the purpose of unlocking, **characterised in that** an eccentric (3), which is rotatable directly by hand or by means of a tool, is in engagement with the latch spring (2), that the latch spring (2) is movable, by rotation of the eccentric, into the locked position, in which it projects out of the housing (1), and into the unlocked position, in which it is accommodated in the housing (1) and that an opening (6) or a hook is provided on the latch spring (2) for the engagement of the eccentric (3).

2. A housing as claimed in Claim 1, **characterised in that** a respective latch spring (2) and a respective eccentric (3) are arranged on the right-hand and left-hand sides of the housing (1).

3. A housing as claimed in Claim 1 or 2, **characterised in that** the width B of the opening (6) is selected to be smaller than the diameter of the eccentric (3) in order to define a right-hand and a left-hand stop for the eccentric (3).

4. A housing as claimed in Claim 1 or 2, **characterised in that** the width (B) of the opening (6) is selected to be the same as or larger than the diameter of the eccentric (3) so that the eccentric (3) is continuously rotatable in both directions of rotation.

5. A housing as claimed in one of Claims 1 to 4, **characterised in that** the eccentric (3) has a handle for rotation by hand.

6. A housing as claimed in one of Claims 1 to 4, **characterised in that** the eccentric (3) has a device (4, 16) for engagement by a conventional tool.

7. A housing as claimed in Claim 6, **characterised in that** the eccentric (3) has a slit (4) for engagement by a screwdriver.

8. A housing as claimed in Claim 6, **characterised in that** the eccentric (3) has a recess for engagement by a Torx screwdriver.

9. A housing as claimed in Claim 6, **characterised in that** the eccentric (3) has a hexagonal head for engagement by a spanner.

10. A housing as claimed in Claim 6, **characterised in that** the eccentric (3) has a hexagonal hole (16) for engagement by a hexagonal head screwdriver.

11. A housing as claimed in one of Claims 1 to 10, **characterised in that** an annular groove (5) is formed in the periphery of the eccentric (3) and is guided in a retaining hole (11) or longitudinal hole (13) in the housing (1).

12. A housing as claimed in one of Claims 1 to 11, **characterised in that** a chamfer (12) or two opposed chamfers (12) are machined on the eccentric (3) and that a spring (2) presses on at least one of the two chamfers (12) in order to produce locking behaviour on rotation of the eccentric (3).

13. A housing as claimed in one of Claims 1 to 11, **characterised in that** a chamfer (12) or two opposed chamfers (12) are machined on the eccentric (3) and that the latch spring (2) presses the eccentric (3) against a side wall (10) of the housing (1) in order to produce locking behaviour on rotation of the eccentric (3).

14. A housing as claimed in one of Claims 1 to 2 or 4 to 11, **characterised in that** the eccentric (3) is constructed without a stop and is continuously rotatable to the right and left.

15. A housing as claimed in one of Claims 1 to 13, **characterised in that** a stop (15) is provided on the eccentric (3) and two stops (14) are provided on the housing (1) for the locked position and the unlocked position.

16. A housing as claimed in one of the preceding claims, **characterised in that** the housing (1) is a housing for a car radio.

## Revendications

1. Boîtier (1) comportant au moins un ressort verrou (2), qui fait saillie hors du boîtier (1) et qui, en vue de l'introduction du boîtier (1) dans un châssis de montage de véhicule ou une cage de montage de véhicule et en vue du déverrouillage, peut pénétrer dans le boîtier (1), **caractérisé en ce qu'**un excentrique (3) pouvant être entraîné en rotation à la main ou au moyen d'un outil est en prise avec le ressort verrou (2), **en ce que** le ressort verrou (2) peut être amené, sous l'effet de la rotation de l'excentrique, en position de verrouillage, dans laquelle il fait saillie hors du boîtier (1), et en position de déverrouillage, dans laquelle il est à l'intérieur du boîtier (1), et **en ce qu'**il est prévu un évidement (6) ou un crochet sur le ressort verrou (2) pour la mise en prise de l'excentrique (3).

2. Boîtier selon la revendication 1, **caractérisé en ce que** sur le côté droit et le côté gauche du boîtier (1) sont agencés respectivement un ressort verrou (2) et respectivement un excentrique (3).

3. Boîtier selon la revendication 1 ou 2, **caractérisé en ce que** la largeur B de l'évidement (6) est inférieure au diamètre de l'excentrique (3) en vue de former une butée à droite et à gauche pour l'excentrique (3).

4. Boîtier selon la revendication 1, 2 ou 3, **caractérisé en ce que** la largeur B de l'évidement (6) est égale ou supérieure au diamètre de l'excentrique (3), de telle sorte que l'excentrique (3) peut tourner en continu dans les deux sens de rotation.

5. Boîtier selon l'une quelconque des revendications 1 à 4, **caractérisé en ce que** l'excentrique (3) est muni d'une poignée permettant de le faire tourner à la main.

6. Boîtier selon l'une quelconque des revendications 1 à 4, **caractérisé en ce que** l'excentrique (3) est muni d'un dispositif (4, 16) permettant l'intervention d'un outil courant.

7. Boîtier selon la revendication 6, **caractérisé en ce que** l'excentrique (3) comporte une fente (4) pour un tournevis.

8. Boîtier selon la revendication 6, **caractérisé en ce que** l'excentrique (3) comporte un évidement pour un tournevis Torx.

9. Boîtier selon la revendication 6, **caractérisé en ce que** l'excentrique (3) comporte une tête à six pans pour une clé plate.

10. Boîtier selon la revendication 6, **caractérisé en ce que** l'excentrique (3) comporte un trou à six pans (16) pour une clé six pans.

11. Boîtier selon l'une quelconque des revendications 1 à 10, **caractérisé en ce qu'**une rainure annulaire (5) est prévue sur la surface périphérique de l'excentrique (3) et est guidée dans un trou de retenue (11) ou trou oblong (13) du boîtier (1).

12. Boîtier selon l'une quelconque des revendications 1 à 11, **caractérisé en ce qu'**un méplat (12) ou deux méplats (12) face à face sont réalisés sur l'excentrique (3) et **en ce qu'**un ressort (2) pousse sur au moins un des deux méplats (12) pour générer un état de blocage lors de la rotation de l'excentrique (3).

13. Boîtier selon l'une quelconque des revendications 1 à 11, **caractérisé en ce qu'**un méplat (12) ou deux méplats (12) face à face sont réalisés sur l'excentrique (3) et **en ce que** le ressort verrou (2) pousse l'excentrique (3) contre une paroi latérale (10) du boîtier (1) en vue de générer un état de blocage lors de la rotation de l'excentrique (3).

14. Boîtier selon l'une quelconque des revendications 1 à 2 ou 4 à 11, **caractérisé en ce que** l'excentrique (3) est conçu sans butée et peut tourner en continu vers la droite et la gauche.

15. Boîtier selon l'une quelconque des revendications 1 à 13, **caractérisé en ce qu'**il est prévu une butée (15) sur l'excentrique (3) et deux butées (14) sur le boîtier (1) pour la position de verrouillage et la position de déverrouillage.

16. Boîtier selon l'une quelconque des revendications précédentes, **caractérisé en ce que** le boîtier (1) est un boîtier pour un autoradio.
